# EUROPÄISCHE PATENTANMELDUNG

(11) **EP 1 508 880 A2**
(43) Veröffentlichungstag der Anmeldung: **23.02.2005**
(21) Anmeldenummer: 04102773.1
(22) Anmeldetag: 17.06.2004
(51) Int. Cl.: G07C 3/00, G07C 5/00

(54) **Verfahren und Einrichtung zum Berechnen der voraussichtlichen Lebensdauer eines Getriebes**

(30) Priorität: 06.08.2003 DE 10336369; 31.10.2003 DE 10353647
(71) Anmelder: Battenfeld Extrusionstechnik GmbH, 32547 Bad Oeynhausen (DE)
(72) Erfinder: Kreth, Norbert, Dr. Ing., 32429, Minden (DE); Vogel, Uwe, Dipl.-Ing., 32657, Lemgo (DE); Kopp, Martin, Dipl.-Ing., 32425, Minden (DE)

(57) **Zusammenfassung**

Die Erfindung betrifft ein Verfahren zur Bestimmung der voraussichtlichen Lebensdauer eines Getriebes (5) einer Maschine (1), die mindestens einen Motor (4), ein Getriebe (5) und Aggregate für eine Anwendung (6), vorzugsweise zur Extrusion, umfasst.

Erfindungsgemäß ist vorgesehen, dass die Belastungsdaten (2) der Maschine (1) aufgenommen werden, der Einfluß dieser Daten auf die Lebensdauer des Getriebes (5) mittels eines mathematischen Models ermittelt wird, und die voraussichtliche Lebensdauer des Getriebes (5) bestimmt wird.

## Beschreibung

Die Erfindung betrifft ein Verfahren zur Bestimmung der voraussichtlichen Lebensdauer eines Getriebes.

Derzeit wird die Verfügbarkeit von Getrieben durch Berechnungsverfahren während der Konstruktionsphase beschrieben. Im Zusammenhang mit der vorgeschriebenen Wartung (vorbeugende Wartung in festen Zeitintervallen) während der Betriebsphase soll die Verfügbarkeit gewährleistet sein.

Bisherige Lebensdauerberechnungen gehen dabei von vereinfachten Verfahren aus. Die Gesamtlebensdauer eines Getriebes wird pauschaliert angegeben. Bei der Berechnung werden idealisierte Belastungskollektive angenommen, die nicht unbedingt mit den wirklich vorhandenen Lasten übereinstimmen müssen. In der Praxis gibt es auf Grund unterschiedlicher Betriebsweisen und der großen Anwendungsbreite eine ebenso hohe Spreizung der Belastungen. Dadurch ist es unmöglich, für jedes Getriebe genaue Vorhersagen über die zu erwartende Lebensdauer zu treffen.

Ein anderer Ansatz nutzt die Zustandsüberwachung eines Getriebes mit Hilfe spezieller Sensorik. Diese Verfahren ermitteln z.B. über Schwingungsanalysen Abweichungen an Verzahnungen und Lagern. Diese Verfahren sind jedoch sehr aufwendig und in der Praxis unangemessen teuer. Außerdem werden Restlaufzeiten erst dann prognostiziert, wenn ein Schaden meßbar (also eingetreten) ist.

**Aufgabe** der vorliegenden Erfindung ist es, die voraussichtliche Lebensdauer eines Getriebes möglichst zu jedem Zeitpunkt ohne aufwendige zusätzliche Meßtechnik zu ermitteln.

Als **Lösung** der Aufgabe wird ein Verfahren vorgeschlagen, bei dem erfindungsgemäß die Belastungsdaten einer Maschine aufgenommen werden, der Einfluß dieser Daten auf die Lebensdauer des Getriebes mittels eines mathematischen Modells ermittelt wird und die voraussichtliche Lebensdauer des Getriebes bestimmt wird.

Vorteilhafterweise werden als Belastungsdaten die Drehzahl und/oder das Drehmoment des Motors ermittelt. Weiterhin kann die Öltemperatur des Getriebes oder die durch die Anwendung rückwirkend auf das Getriebe wirkenden Belastungen wie Schmelzedruck und Schwingungen als Belastungsdaten erfaßt werden.

All diese ermittelten Belastungsdaten werden über die Steuerung der Maschine festgehalten und ausgewertet. Hierzu dient ein mathematisches Berechnungsmodell, in das beispielsweise über eine Verknüpfung Daten aus einem Bewertungsnetz einfließen können. Weiterhin ist es möglich, Erfahrungswissen zur Bewertung dieser Lasteinflüsse mit einzubinden.

Insbesondere ist bei der vorgeschlagenen Lösung daran gedacht, das Verfahren für ein Extrudergetriebe einzusetzen. Mittels dieser vorausberechneten Verfügbarkeit kann an den Maschinenbetreiber eine Verfügbarkeitsgarantie durch den Hersteller gegeben werden.

Als weitere Kenngröße kann zur Bestimmung des Belastungszustandes die verwendete Ölqualität berücksichtigt werden. Fortbildungsgemäß ist es denkbar, bei den Belastungsdaten das Getriebegeräusch einfließen zu lassen, wobei hier eine vereinfachte Getriebegeräuschmessung verwendet wird.

Durch die Kenntnis dieser Belastungsdaten und die Berechnung mittels eines mathematischen Modells ist es möglich, die erwartete Standzeit eines Getriebes ohne aufwendige Meßtechnik vorherzubestimmen. Es wird also durch die Auswertung von an der Maschine vorhandenen Belastungsdaten (Drehmoment, Drehzahl, Laufzeit, Axialkräfte, Temperaturen, Änderung der Ölviskosität und anderer Kenndaten) der Belastungscharakter der Maschine gelernt. Mit diesen Daten, den Auslegungsparametern des Getriebes und einem math. Modell (analoge Modelle sind beispielsweise bei der Auslegung der Nominalbelastung von Getrieben bekannt) wird eine Aussage über die Ausfallwahrscheinlichkeit von einzelnen Bauteilen getroffen.

Vorteilhaft ist das Erkennen von Belastungszuständen, die zu Bauteilschäden führen können. Mit diesem Wissen kann man bestimmen, wann welche Bauteile des Getriebes ihre Belastungsaufnahmefähigkeit erreicht haben. Diese können dann im Rahmen zustandsorientierter Wartung gezielt ausgetauscht werden.

An einem Getriebe (speziell auch Extrudergetriebe) werden die Belastungsdaten (Drehmoment, Drehzahl, Axialkräfte) aufgenommen. Diese werden in einer Recheneinheit ausgewertet. Für die einzelnen Bauteile (Lager, Verzahnungen, Wellen) des Getriebes werden mit Hilfe mathematischer Modelle die Belastungen aufgeschlüsselt. Durch Vergleich mit der theoretischen Auslegung des Bauteils und mit Hilfe von Erfahrungswissen wird eine verbleibende Verfügbarkeit ermittelt

Weiterhin sollen Daten in die Berechnung einfließen (wie z.B. Getriebeöltemperatur), die heute noch nicht online mit der Lebensdauer in Verbindung gebracht werden.

Das Erfahrungswissen des einschlägigen Fachmannes kann beispielsweise durch Wissensdatenbanken oder durch Expertensysteme eingebracht werden.

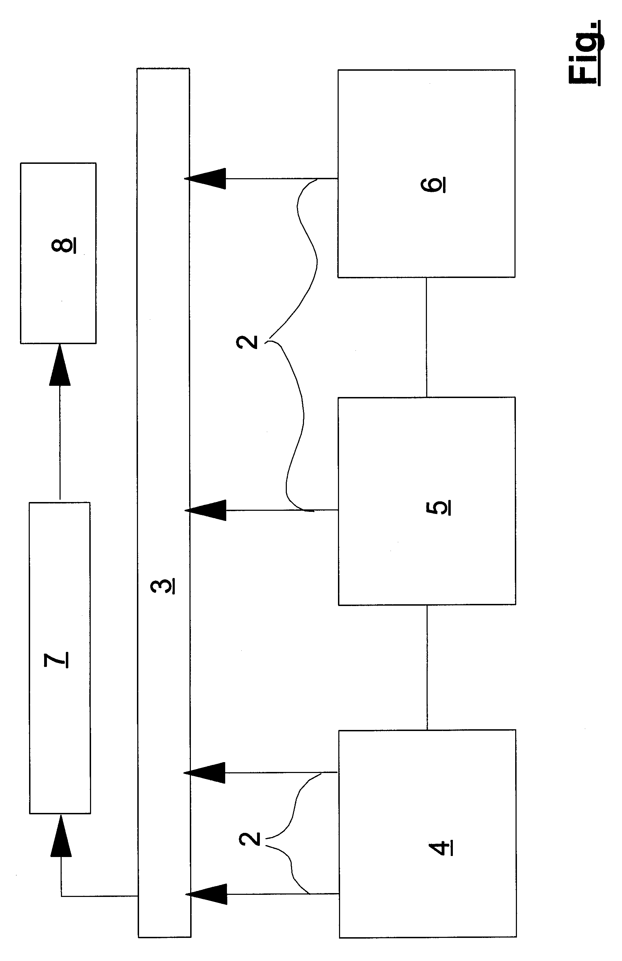

In der Zeichnung ist ein Ausführungsbeispiel der Erfindung schematisch als Flußdiagramm dargestellt, es zeigt die Figur eine Maschine 1 mit einem Motor 4, einem Getriebe 5 sowie eine damit verbundene Anwendung 6, wobei hier in erster Linie an eine Extruderanlage gedacht ist. Mittels der Pfeile ist die Aufnahme von Belastungsdaten 2 in die Steuerung 3 dargestellt. Im einzelnen wird vom Motor die Drehzahl und/oder das Drehmoment ermittelt, vom Getriebe die Öltemperatur oder von der Extrusionsanlage, sprich der Anwendung, der Druck, vorzugsweise der Schmelzedruck, als Belastungsdaten 2 an die Steuerung weitergegeben. Mittels eines in der Steuerung integrierten oder auch im lokalen Netzwerk extern betriebenen Rechners wird anhand eines mathematischen Modells unter Zuhilfenahme der aufgenommenen Belastungsdaten 2 die zu erwartende Lebensdauer 7 des Getriebes 5 ermittelt. Anhand dieser berechneten Lebensdauer kann ein Wartungsintervall als zustandsorientierte Wartung 8 bestimmt werden, ja sogar permanent der Zustand des Getriebes abgerufen werden.

### Bezugszeichenliste:

- 1: Maschine
- 2: Belastungsdaten
- 3: Steuerung
- 4: Motor
- 5: Getriebe
- 6: Anwendung
- 7: ermittelte Lebensdauer
- 8: erforderliche Wartung

## Patentansprüche

1. Verfahren zur Bestimmung der voraussichtlichen Lebensdauer eines Getriebes (5) einer Maschine (1), die mindestens einen Motor (4), ein Getriebe (5) und Aggregate für eine Anwendung (6), vorzugsweise zur Extrusion, umfasst,
**dadurch gekennzeichnet, dass**
die Belastungsdaten (2) der Maschine (1) aufgenommen werden, der Einfluß dieser Daten auf die Lebensdauer des Getriebes (5) mittels eines mathematischen Models ermittelt wird, und die voraussichtliche Lebensdauer des Getriebes (5) bestimmt wird.

2. Verfahren nach Anspruch 1, **dadurch gekennzeichnet, dass** als Belastungsdaten (2) die Drehzahl und/oder das Drehmoment des Motors erfaßt werden.

3. Verfahren nach Anspruch 1 oder 2, **dadurch gekennzeichnet, dass** als Belastungsdaten (2) die Öltemperatur des Getriebes (5) erfaßt wird.

4. Verfahren nach Anspruch 1, 2 oder 3, **dadurch gekennzeichnet, dass** als Belastungsdaten (2) die durch die Anwendung rückwirkend auf das Getriebe wirkende Belastungen wie Schmelzedruck und Schwingungen erfaßt werden.

5. Verfahren nach einem der vorigen Ansprüchen, **dadurch gekennzeichnet, dass** bei der Ermittlung des Einflusses der Belastungsdaten (2) eine Verknüpfung mit einem Bewertungsnetzwerk erfolgt.

6. Verfahren nach einem der vorigen Ansprüchen, **dadurch gekennzeichnet, dass** bei der Ermittlung des Einflusses der Belastungsdaten (2) das Erfahrungswissen zur Bewertung der Lasteinflüsse eingebunden wird.

7. Verfahren nach einem der vorigen Ansprüche, **dadurch gekennzeichnet, daß** es sich bei der Anwendung um ein Extrudergetriebe handelt.

8. Verfahren nach einem der vorigen Ansprüche, **dadurch gekennzeichnet, daß** die berechnete Verfügbarkeit Voraussetzung einer Verfügbarkeitsgarantie des Herstellers an den Maschinenbetreiber ist.

9. Verfahren nach einem der vorigen Ansprüche, **dadurch gekennzeichnet, daß** als zusätzliche Beschreibung des Belastungszustands die Ölqualität bestimmt wird.

10. Verfahren nach einem der vorigen Ansprüche, **dadurch gekennzeichnet, daß** als zusätzliche Beschreibung des Belastungszustands die Beurteilung des Getriebegeräusches durch eine vereinfachte Getriebegeräuschmessung ermittelt wird.

11. Verfahren nach einem der vorigen Ansprüchen, **dadurch gekennzeichnet, dass** nach Erreichen der Belastungsaufnahmefähigkeit das Getriebe (5) zustandsorientiert gewartet wird und Bauteile gezielt ausgetauscht werden.
